# EUROPEAN PATENT SPECIFICATION

(11) **EP 0 822 608 B1**
(45) Date of publication and mention of the grant of the patent: **28.11.2001**
(21) Application number: 97305697.1
(22) Date of filing: 29.07.1997
(51) Int. Cl.: H01M 10/40, H01B 1/12, C08L 57/06

(54) **Polymeric solid electrolyte and lithium secondary cell adopting the same**
Polymerfeststoffelektrolyt und diesen enthaltende aufladbare Lithiumzelle
Electrolyte solide polymère et pile rechargeable au lithium contenant cet électrolyte

(30) Priority: 30.07.1996 KR 9631528; 16.10.1996 KR 9646314; 03.07.1997 KR 9730817
(43) Date of publication of application: 04.02.1998
(73) Proprietor: SAMSUNG ELECTRONICS CO., LTD., Suwon-City, Kyungki-do (KR)
(72) Inventor: Lee, Doo-yeon, Uiwang-city, Kyungki-di (KR); Sung, Sang-hyun, Kwangjin-gu, Seoul (KR); Hirai, Yasumasa, Nishikyoku, Kyoto-city (JP); Doo, Seok-gwang, Bundang-gu, Sungnam-city (KR)
(74) Representative: Kyle, Diana

(56) References cited:
- EP-A- 0 161 881
- GB-A- 2 257 151
- US-A- 5 340 672
- US-A- 5 463 179
- PATENT ABSTRACTS OF JAPAN vol. 096, no. 011, 29 November 1996 & JP 08 182659 A (SEKISUI PLASTICS CO LTD), 16 July 1996
- PATENT ABSTRACTS OF JAPAN vol. 016, no. 022 (E-1156), 20 January 1992 & JP 03 238704 A (TOYO INK MFG CO LTD), 24 October 1991

## Description

### Background of the Invention

The present invention relates to a polymeric solid electrolyte and a lithium secondary cell adopting the same, and more particularly, to a polymeric solid electrolyte having excellent ion conductivity, which can be processed easily due to its excellent mechanical property. The invention further relates to a lithium secondary cell adopting such a polymeric solid electrolyte.

As portable electronic appliances such as camcoders, cellular phones, laptops, etc. become smaller and lighter, a secondary cell having high energy density, used as a driving source thereof, is required. There are ten or more kinds of secondary cells, including the nickel-cadmium cell, the nickel-hydrogen cell, the lithium ion cell and so on. In particular, the lithium ion cell has been the focus as a next generation power source due to its long lifetime and high capacity.

Research into the lithium secondary cell began in the early 1970s, and there has been competition among worldwide research institutes to develop a lithium secondary cell for practical use. The Sony Energy Tech. Co. developed a lithium-carbon secondary cell having lithium anode obtained from lithium-cobalt oxide and carbon cathode. Also, the Moly Energy Co. commercialized a lithium-carbon secondary cell having lithium anode obtained from lithium nickel oxide and carbon cathode.

As an anode active material for the lithium secondary cell, lithium cobalt oxide (LiCoO₂), lithium nickel oxide (LiNiO₂) or lithium manganese oxide (LiMn₂O₄) is used. Also, as a cathode active material, metallic lithium, lithium alloy or carbon is used. Also, liquid or solid electrolyte is used as an electrolyte. However, if a liquid electrolyte is used, many problems related to stability, e.g., breakage of cell caused by evaporation, occur. In order to solve these problems, usage of a solid electrolyte instead of the liquid electrolyte has been proposed.

Generally, solid electrolyte does not leak electrolyte solution and is easily processed. Thus, research into the solid electrolyte has been actively performed. Interest in a polymeric solid electrolyte is particularly great. The polymeric solid electrolyte is classified into a solid type without an organic electrolyte solution and a gel type including organic electrolyte solution.

A crosslinked polyether substance is included in the solid type. The solid type electrolyte has a conductivity of about 10⁻⁴ S/cm. However, in order to apply the electrolyte to a cell, a conductivity of 10⁻³ S/cm or more is required. Thus, it is difficult in practice to use the solid type electrolyte due to its insufficient conductivity and poor mechanical property.

On the other hand, the gel type solid electrolyte is being focused as a material of the secondary cell, having high possibility to be practically used, due to its conductivity of 10⁻³ S/cm or more and sufficient mechanical intensity. For example, Japanese Laid-open Patent Publication No. 4-306560 discloses a polymeric solid electrolyte including a copolymer of acrylonitrile and methyl acrylate or a copolymer of acrylonitrile and methyl methacrylate, support electrolyte salt and solvent such as propylene carbonate.

However, this kind of electrolyte has the following problems. First, the selection range of solvent used for manufacturing electrolyte is very restricted. Second, the manufacturing of the electrolyte is difficult and high-temperature condition of above 180°C is required. Third, due to its poor ability of holding organic electrolyte solution (including the support electrolyte salt and solvent), the organic electrolyte solution may leak during the usage of cell.

As another example of the gel type solid electrolyte, Japanese Laid-open Patent Publication No. 3-207752 discloses a polymeric solid electrolyte manufactured by irradiating ultraviolet rays onto a liquid composition including polyethylene glycol and/or dimethacrylate, support electrolyte salt and solvent. The electrolyte has excellent plasticity and poor conductivity of 10⁻⁴S/cm or less, so that it is difficult to apply the electrolyte to a cell.

To solve the above problems by increasing conductivity, U.S. Patent No. 5,463,179 introduces a rigid functional group such as an alkyl group in a polymer matrix, resulting in a stable three-dimensional space within the polymer matrix. However, the processing property thereof is not suitable even if the conductivity is remarkably increased.

### Summary of the Invention

It is an object of the present invention to provide a gel type polymeric solid electrolyte having excellent conductivity and mechanical properties, and which does not leak an organic electrolyte solution included therein.

It is a another object of the present invention to provide a lithium secondary cell adopting the polymeric solid electrolyte.

To achieve the first object, there is provided a polymeric solid electrolyte which comprises a polymer matrix composed of a copolymer of polymerizable monomer represented by formula (1) and cross-linking agent represented by the formula (2). 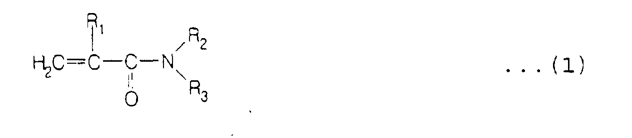 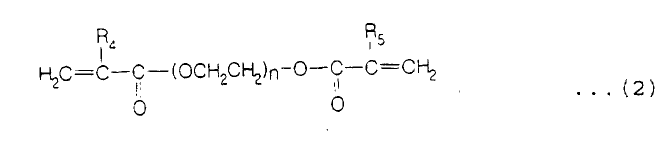 where R₁ is hydrogen or a methyl group, and R₂ and R₃ are each independently selected from hydrogen, C₁~C₆ alkyl group,-(R)N(R')₂ and -(R")OH, and R₄ and R₅ are independently hydrogen or a methyl group, n is an integer of from 3 to 30, wherein R, R' and R" are C₁~C₆ alkyl groups.

To achieve the second object, there is provided a lithium secondary cell adopting the polymeric solid electrolyte, providing improvement in the operating voltage, lifetime and energy density.

Preferably, the solvent includes a non-aqueous solvent with high dielectric constant or the non-aqueous solvent (first solvent) and a second solvent having an amide group.

### Detailed Description of the Invention

A polymeric solid electrolyte according to the present invention comprises a polymer matrix, a polymerization initiator and an electrolyte solution.

The polymer matrix is composed of a polymer formed by the copolymerization between a polymerizable monomer of formula (1) and a cross-linking agent of fomula (2). The content of the polymerizable monomer is 10-15wt%, and the content of the cross-linking agent is 5-15wt%, based on the weight of the polymeric solid electrolyte.

A mixing ratio of the polymerizable monomer and the cross-linking agent is preferably 1:9∼9:1 based on weight, which results in advantageous mechanical properties and conductivity.

The content of the polymerization initiator is 0.5∼1.5wt%, and the content of the electrolyte solution is 68.5~84.5wt%, based on the weight of the polymeric solid electrolyte. Here, the electrolyte solution is composed of a solvent and an inorganic salt, and the content of the inorganic salt is 6∼17wt% based on the total weight of the electrolyte solution. Also, as the solvent, a non-aqueous solvent is used independently, or a mixture of the non-aqueous solvent and a solvent containing an amide group is used.

Examples of the polymerizable monomer of formula (1) are acrylamide, N,N-dimethylacryl amide, N,N-diethylacrylamide, N-isopropylacrylamide, N,N-dimethylaminopropylacrylamide, and acryloyl morpholine. Among these, N-isopropylacryl amide and acryloyl morpholine are preferred.

Examples of the cross-linking agent of formula (2) are polyethyleneglycol diacrylate and polyethyleneglycol dimethacrylate, wherein the number of the repeating unit of oxyethylene may be 1∼30, preferably, 3∼30. Here, if n is 1 or 2, the plasticity slightly decreases.

In the present invention, the solvent of the electrolyte solution is a non-aqueous solvent, particulaly, capable of being dissociated due to its high dielectric constant and polarity. Also, a mixture of the non-aqueous solvent (first solvent) and a second solvent capable of being contained within a matrix due to its excellent affinity to the polymer matrix may be used. Here, the solvent is included so as to maintain the polymeric solid electrolyte in a gel state. Preferably, the content of the electrolyte solution includes the inorganic salt and the solvent is 68.5-84.5wt% based on the weight of the polymeric solid electrolyte.

As the first solvent, a solvent showing no phase separating phenomenon when mixed with the compound of formula (1) and (2) is preferred. Particularly, it is preferable to select one from propylene carbonate, ethylene carbonate, γ-butyrolactone, 1,3-dioxolane, dimethoxyethane, dimethyl carbonate, diethyl carbonate, tetrahydrofuran (THF), dimethylsulfoxide and polyethyleneglycol dimethylether.

As the second solvent, a solvent having an amide group as in the polymerizable monomer of formula (1) is used. For example, the second solvent includes N,N-dimethylacetamide, N,N-diethylacetamide, N,N-dimethylformamide and N,N-diethylformamide.

When the first solvent is used together with the second solvent having excellent affinity to the polymer matrix, the electrolyte solution is evenly distributed within the network structure of the polymer matrix and viscosity of the electrolyte solution is lowered, improving the ion conductivity of a support electrolyte salt being dissolved within the solvent.

Preferably, a mixing ratio of the first solvent and the second solvent is 1:3-3:1 based on volume, more preferably, 1:1 based on volume. If the mixing ratio of the second solvent with respect to the first solvent is above this range, the mechanical strength of the electrolyte is markedly decreased, so that the electrolyte is fragile during the cell assembly. Meanwhile, if the mixing ratio thereof is below the range, the ion conductivity of the electrolyte decreases and the electrolyte hardens.

As an ionic inorganic salt, an ionic lithium salt is selected from lithium perchlorate (LiClO₄), lithium tetrafluoroborate (LiBF₄), lithium hexafluorophosphate (LiPF₆), lithium trifluoromethansulfonate (LiCF₃SO₃) and lithium bistrifluoromethansulfonylamide (LiN(CF₃SO₂)₂). Preferably, the content of the ionic inorganic salt is 6~17wt.% based on the weight of the electrolyte solution. Preferably, the contentration of the ionic inorganic salt with respect to the solvent is 0.5∼1.5M. Here, if the concentration of the ionic inorganic salt exceeds 1.5M, mobility of the lithium ions is decreased and the ion conductivity is sharply decreased. On the contrary, if the concentration of the ionic inorganic salt is less than 0.5M, the number of ions participating in the movement of the lithium ions is decreased, thereby decreasing the ion conductivity.

The polymeric solid electrolyte according to the present invention is obtained through the following steps.

First, a polymerizable monomer having an amide group as a side chain, and polyethyleneglycol diacrylate or dimethacrylate are mixed with a weight ratio of 1:9~9:1, and then an ionic inorganic salt and a solvent are added to the mixture to produce a polymeric solid electrolyte composition.

The polymeric electrolyte composition is coated on a support such as aluminum thin film and mylar film using a doctor blade or a bar coater, and then polymerization is performed to complete a polymeric solid electrolyte according to the present invention.

The polymerization initiator includes a photopolymerization or thermalpolymerization initiator. As the photopolymerization initiator, there are 2-hydroxy-2-methyl-1-phenylpropane, 1-hydroxycyclohexylphenylketone, 1-(4-isoprophlphenyl)-2-hydroxy-2-methylpropane), benzyldimethylketal, benzoin, benzoinethylether. As the thermalpolymerization initiator, there are azobisisobutyronitrile and benzoyl peroxide.

Hereinafter, a lithium secondary cell adopting the polymeric solid electrolyte according to a preferred embodiment of the present invention, and a manufacturing method therefor will be described.

First, one active material for the lithium cathode, selected from lithium manganese oxide, lithium nickel oxide and lithium cobalt oxide, and a conductive agent are added to the composition for the polymeric solid electrolyte including the polymerizable monomer of the formula (1), the cross-linking agent of the formula (2), the polymerization initiator, the electrolyte solution containing the inorganic salt and the solvent, and then mixed well to form a reaction mixture.

After coating the reaction mixture on an cathode current collector, the heating is performed to form a composite cathode layer.

On the other hand, a mixture of carbon powder and the composition for the polymeric solid electrolyte is coated on a anode current collector and then heated to form a composite anode layer.

After overlapping the composite cathode layer, a polymeric solid electrolyte layer and the composite anode layer, the overlapped layers are combined by a thermal process or applying a predetermined pressure, thereby completing a lithium secondary cell of the present invention.

Examples of the present invention will now be described, however, the present invention is not limited to the following examples.

### <Example 1>

N-isopropylacryl amide and polyethyleneglycol dimethacrylate were mixed with a weight ratio of 3:1, and then propylene carbonate including 1M LiBF₄ and benzoinethylether were added to the mixture, resulting in a polymeric electrolyte composition. After coating the composition on a glass substrate, the substrate was subjected to ultraviolet rays for 30 minutes to obtain a gel type polymeric solid electrolyte.

### <Example 2>

A gel type polymeric solid electrolyte was obtained by the same method as that of Example 1, except N-acryloyl morpholine was used instead of N-isopropylacryl amide.

### <Example 3>

A gel type polymeric solid electrolyte was obtained by the same method as that of Example 1, except γ-butyrolactone was used instead of propylene carbonate.

### <Example 4>

Ethylene carbonate containing 1M LiPF₆ and N,N-dimethylacetamide were mixed with 1:1 volumetric ratio to prepare an electrolyte solution.

N-isopropylacrylamide and polyethyleneglycol dimethacrylate were added to the electrolyte solution with a weight ratio of 3:1, and then benzoylethylether was mixed thereinto.

The above composition was coated on a glass substrate and then the resultant was subjected to ultraviolet rays for about 30 minutes to be polymerized, resulting in a gel type polymeric solid electrolyte.

### <Example 5>

A gel type polymeric solid electrolyte was produced by the same method as that of Example 4 except N,N-dimethylformamide was used instead of N, N-dimethylacetamide.

### <Example 6>

A gel type polymeric solid electrolyte was produced by the same method as that of Example 4 except N,N-diethylacetamide was used instead of N, N-dimethylacetamide.

### <Example 7>

A gel type polymeric solid electrolyte was produced by the same method as that of Example 4 except N,N-diethylformamide was used instead of N, N-dimethylacetamide.

### <Example 8>

A gel type polymeric solid electrolyte was produced by the same method as that of Example 4 except the concentration of LiPF₆ was 0.5M.

### <Example 9>

A gel type polymeric solid electrolyte was produced by the same method as that of Example 4 except the concentration of LiPF₆ was 1.0M.

### <Example 10>

A gel type polymeric solid electrolyte was produced by the same method as that of Example 4 except the concentration of LiPF₆ was 1.5M.

### <Example 11>

A gel type polymeric solid electrolyte was produced by the same method as that of Example 4 except ethylene carbonate and N,N-dimethylacetamide were mixed with a volumetric ratio of 1:3.

### <Example 12>

A gel type polymeric solid electrolyte was produced by the same method as that of Example 4 except ethylene carbonate and N,N-dimethylacetamide was mixed with a volumetric ratio of 3:1.

### <Example 13>

A gel type polymeric solid electrolyte was produced by the same method as that of Example 4 except propylene carbonate was used instead of ethylene carbonate.

### <Example 14>

A gel type polymeric solid electrolyte was produced by the same method as that of Example 4 except 1M LiBF₄ was used instead of 1M LiPF₆.

Performance tests of the polymeric solid electrolytes obtained by the above examples were conducted by the following methods.

### 1) Ion conductivity

A gel type film having a diameter of 13mm was prepared from respective polymeric solid electrolytes obtained through Examples 1 to 14. After putting the film between two stainless steel disks, the ion conductivities were measured using an impedance analyzer adopting an alternating current impedance method.

### 2) Flexibility

A gel type film was wound around a stainless steel rod having a diameter of 5mm. Then, the film was unwound from the rod. This process was repeated about 10 times, and then the appearance of the film was visually checked. Here, the visual appearance of the film was evaluated into one of three levels: excellent, good or poor, wherein "excellent" represents a state in which no defects are visually detected in the gel type film, "good" represents a state in which very trivial defects are detected, which would not have an adverse effect in usage, and "poor" represents a state in which defects are visually detected.

### 3) Leakage of electrolyte solution

A filter paper was attached to the gel type film for a predetermined time. Then, it was observed whether the electrolyte solution leaks or not.

The results of the above performance tests with respect to Examples 1-14 are shown in Table 1.

**Table. 1**

| Examples | ion conductivity (S/cm) | flexibility | leakage of electrolyte solution |
|---|---|---|---|
| 1 | 1.4x10⁻³ | good | X |
| 2 | 1.6x10⁻³ | good | X |
| 3 | 2.0x10⁻³ | good | X |
| 4 | 4.02x10⁻³ | excellent | X |
| 5 | 2.17x10⁻³ | excellent | X |
| 6 | 1.89x10⁻³ | excellent | X |
| 7 | 1.64x10⁻³ | excellent | X |
| 8 | 3.86x10⁻³ | excellent | X |
| 9 | 4.02x10⁻³ | excellent | X |
| 10 | 3.53x10⁻³ | excellent | X |
| 11 | 2.57x10⁻³ | good | X |
| 12 | 2.14x10⁻³ | poor | X |
| 13 | 1.4x10⁻³ | excellent | X |
| 14 | 1.68x10⁻³ | good | X |

As shown in Table 1, the ion conductivities of the polymeric solid electrolyte according to Examples 1-14 were improved. Also, flexibility of the electrolytes manufactured in Examples 1-11 and 13-14 was good. However, in the case of Example 12, the flexibility of the electrolyte was decreased due to the formation of a hard polymer gel.

Also, leakage of the electrolyte solution was not found in any of the electrolytes manufactured by Examples 1-14. Thus, it can be found that the organic electrolyte solution holding capacity of the gel type polymeric solid electrolytes is excellent.

The polymeric solid electrolyte according to the present invention provides the following effects: 1) the organic electrolyte solution hardly leaks from the electrolyte; 2) the electrolyte can be easily processed due to its excellent mechanical properties such as flexibility and plasticity; 3) the electrolyte can be applied to a lithium secondary cell requiring excellent ion conductivity due to its high conductivity of 10⁻³S/cm or more.

## Claims

1. A polymeric solid electrolyte comprising a polymer matrix composed of a copolymer of a polymerizable monomer represented by the formula (1) and a cross-linking agent represented by the formula (2) ;
a polymerization initiator;
an electrolyte solution containing an inorganic salt and a solvent: 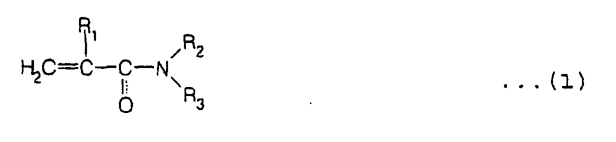 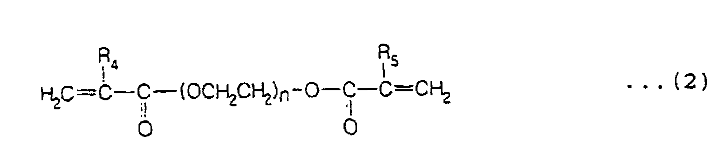 where R₁ is hydrogen or a methyl group, and R₂ and R₃ are each independently selected from hydrogen, C₁~C₆ alkyl group,-(R)N(R')₂ and -(R")OH, and R₄ and R₅ are each independently hydrogen or a methyl group, n is an integer of from 3 to 30, wherein R, R' and R" are C₁~C₆ alkyl group.

2. A polymeric solid electrolyte as claimed in claim 1, wherein a mixing ratio of the polymerizable monomer represented by the formula (1) and cross-linking agent represented by the formula (2) is 1:9~9:1 based on weight.

3. A polymeric solid electrolyte as claimed in claim 1 or 2, wherein the polymerizable monomer represented by the formula (1) is at least one selected from acrylamide, N,N-dimethylacrylamide, N,N-diethylacrylamide, N-isopropylacrylamide, N,N-dimethylaminopropylacrylamide, and acryloyl morpholine.

4. A polymeric solid electrolyte as claimed in any of claims 1 to 3,, wherein the cross-linking agent is polyethyleneglycol diacrylate or polyethyleneglycol dimethacrylate.

5. A polymeric solid electrolyte as claimed in any of claims 1 to 4, wherein the solvent is a non-aqueous solvent.

6. A polymeric solid electrolyte as claimed in any of claims 1 to 4, wherein the solvent is a mixture of the non-aqueous solvent and a solvent having an amide group.

7. A polymeric solid electrolyte as claimed in claim 5 or 6, wherein the non-aqueous solvent is at least one selected from propylene carbonate, ethylene carbonate, γ-butyrolacetone, 1,3-dioxolane, dimethoxyethane, dimethylcarbonate, diethylcarbonate, tetrahydrofuran (THF), dimethylsulfoxide and polyethyleneglycol dimethylether.

8. A polymeric solid electrolyte as claimed in claim 6, wherein the solvent having the amide group is at least one selected from N,N-dimethylacetamide, N,N-diethylacetamide, N,N-dimethylformamide and N,N-diethylformamide.

9. A polymeric solid electrolyte as claimed in any of claims 6 to 8, wherein the mixing ratio of the non-aqueous solvent and the solvent having the amide group is 1:3~3:1 based on volume.

10. A polymeric solid electrolyte as claimed in claim 9, wherein the mixing ratio of the non-aqueous solvent and the solvent having the amide group is 1:1 based on volume.

11. A polymeric solid electrolyte as claimed in any of claims 1 to 10, wherein the inorganic salt is at least one selected from lithium perchlorate (LiClO₄), lithium tetrafluoroborate (LiBF₄), lithium hexafluorophosphate (LiPF₆), lithium trifluoromethansulfonate (LiCF₃SO₃) and lithium bistrifluoromethansulfonylamide (LiN(CF₃SO₂)₂).

12. A polymeric solid electrolyte as claimed in any of claims 1 to 11, wherein the content of the polymerizable monomer expressed by the formula (1) is 10~15wt% based on the weight of the polymeric solid electrolyte.

13. A polymeric solid electrolyte as claimed in any of claims 1 to 12, wherein the content of the cross-linking agent expressed by the formula (2) is 5∼15wt% based on the weight of the polymeric solid electrolyte.

14. A polymeric solid electrolyte as claimed in any of claims 1 to 13, wherein the content of the polymerization initiator is 0.5∼1.5wt% based on the weight of the polymeric solid electrolyte.

15. A polymeric solid electrolyte as claimed in any of claims 1 to 14, wherein the content of the electrolyte solution is 68.5~84.5wt% based on the weight of the polymeric solid electrolyte.

16. A polymeric solid electrolyte as claimed in any of claims 1 to 15, wherein the content of the inorganic salt deferred by the formula (1) is 6∼17wt% based on the weight of the electrolyte solution.

17. A lithium secondary cell adopting the polymeric solid electrolyte as claimed in any of claims 1 to 16.

## Patentansprüche

1. Polymerer Feststoffelektrolyt, umfassend eine Polymermatrix, zusammengesetzt aus einem Copolymeren eines polymerisierbaren Monomeren, dargestellt durch die Formel (1), und eines Vernetzungsmittels, dargestellt durch die Formel (2);
einen Polymerisationsinitiator;
eine Elektrolytlösung, enthaltend ein anorganisches Salz und ein Lösungsmittel; 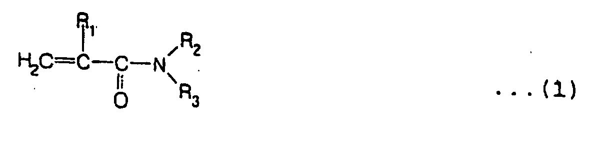 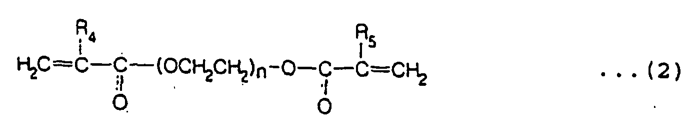 worin R₁ ein Wasserstoffatom oder eine Methylgruppe bedeutet und R₂ und R₃ je unabhängig ausgewählt sind aus Wasserstoff, einer C₁-C₆-Alkylgruppe, -(R)N(R')₂ und -(R")OH, und R₄ und R₅ je unabhängig Wasserstoff oder eine Methylgruppe bedeuten, n eine ganze Zahl von 3 bis 30 bedeutet, worin R, R' und R" C₁-C₆-Alkylgruppen bedeuten.

2. Polymerer Feststoffelektrolyt nach Anspruch 1, worin das Mischverhältnis des polymerisierbaren Monomeren, dargestellt durch die Formel (1), und des Vernetzungsmittels, dargestellt durch die Formel (2), 1:9 bis 9:1, bezogen auf das Gewicht, beträgt.

3. Polymerer Feststoffelektrolyt nach Anspruch 1 oder 2, wobei das polymerisierbare Monomere, dargestellt durch die Formel (1), mindestens eines ist, ausgewählt aus Acrylamid, N,N-Dimethylacrylamid, N,N-Diethylacrylamid, N-Isopropylacrylamid, N,N-Dimethylaminopropylacrylamid und Acryloylmorpholin.

4. Polymerer Feststoffelektrolyt nach einem der Ansprüche 1 bis 3, wobei das Vernetzungsmittel Polyethylenglykoldiacrylat oder Polyethylenglykoldimethacrylat ist.

5. Polymerer Feststoffelektrolyt nach einem der Ansprüche 1 bis 4, wobei das Lösungsmittel ein nichtwässriges Lösungsmittel ist.

6. Polymerer Feststoffelektrolyt nach einem der Ansprüche 1 bis 4, wobei das Lösungsmittel ein Gemisch aus nicht-wässrigem Lösungsmittel und einem Lösungsmittel, das eine Amidgruppe enthält, ist.

7. Polymerer Feststoffelektrolyt nach einem der Ansprüche 5 oder 6, wobei das nicht-wässrige Lösungsmittel mindestens eines ist, ausgewählt aus Propylencarbonat, Ethylencarbonat, γ-Butyrolaceton, 1,3-Dioxolan, Dimethoxyethan, Dimethylcarbonat, Diethylcarbonat, Tetrahydrofuran (THF), Dimethylsulfoxid und Polyethylenglykoldimethylether.

8. Polymerer Feststoffelektrolyt nach Anspruch 6, wobei das Lösungsmittel, das eine Amidgruppe enthält, mindestens eines ist, ausgewählt aus N,N-Dimethylacetamid, N,N-Diethylacetamid, N,N-Dimethylformamid und N,N-Diethylformamid.

9. Polymerer Feststoffelektrolyt nach einem der Ansprüche 6 bis 8, wobei das Mischverhältnis des nicht-wässrigen Lösungsmittels und des Lösungsmittels, das eine Amidgruppe enthält, 1:3 bis 3:1, bezogen auf das Volumen, beträgt.

10. Polymerer Feststoffelektrolyt nach Anspruch 9, wobei das Mischverhältnis des nicht-wässrigen Lösungsmittels und des Lösungsmittels, das eine Amidgruppe enthält, 1:1, bezogen auf das Volumen, beträgt.

11. Polymerer Feststoffelektrolyt nach einem der Ansprüche 1 bis 10, wobei das anorganische Salz mindestens eines ist, ausgewählt aus Lithiumperchlorat (LiClO₄), Lithiumtetrafluorborat (LiBF₄), Lithiumhexafluorphosphat (LiPF₆), Lithiumtrifluormethansulfonat (LiCF₃SO₃) und Lithiumbistrifluormethansulfonylamid (LiN(CF₃SO₂)₂).

12. Polymerer Feststoffelektrolyt nach einem der Ansprüche 1 bis 11, wobei der Gehalt des polymerisierbaren Monomeren, ausgedrückt durch die Formel (1), 10 bis 15 Gew.-%, bezogen auf das Gewicht des polymeren Feststoffelektrolyten, beträgt.

13. Polymerer Feststoffelektrolyt nach einem der Ansprüche 1 bis 12, wobei der Gehalt an Vernetzungsmittel, ausgedrückt durch die Formel (2), 5 bis 15 Gew.-%, bezogen auf das Gewicht des polymeren Feststoffelektrolyten, beträgt.

14. Polymerer Feststoffelektrolyt nach einem der Ansprüche 1 bis 13, wobei der Gehalt des Polymerisationsinitiators 0,5 bis 1,5 Gew.-%, bezogen auf das Gewicht des polymeren Feststoffelektrolyten, beträgt.

15. Polymerer Feststoffelektrolyt nach einem der Ansprüche 1 bis 14, wobei der Gehalt der Elektrolytlösung 68,5 bis 84,5 Gew.-%, bezogen auf das Gewicht des polymeren Feststoffelektrolyten, beträgt.

16. Polymerer Feststoffelektrolyt nach einem der Ansprüche 1 bis 15, wobei der Gehalt an anorganischem Salz, Bezug nehmend auf die Formel (I) 6 bis 17 Gew.-%, bezogen auf das Gewicht der Elektrolytlösung, beträgt.

17. Lithium-Sekundärzelle, bei der der polymere Feststoffelektrolyt nach einem der Ansprüche 1 bis 16 verwendet wird.

## Revendications

1. Electrolyte solide polymère comprenant une matrice polymère composée d'un copolymère de monomère polymérisable représenté par la formule (1) et d'un agent de réticulation représenté par la formule (2).
- un amorceur de polymérisation:
- une solution d'électrolyte contenant un sel inorganique et un solvant: 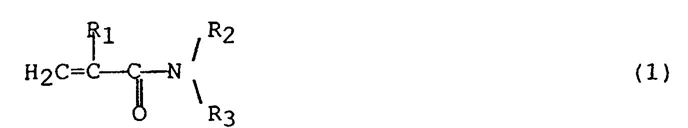 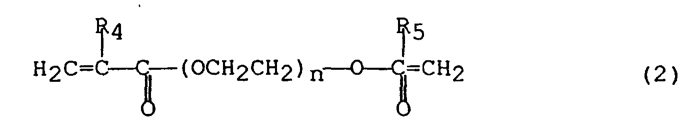
dans lesquelles R₁ est un atome d'hydrogène ou un groupe méthyle, et R₂ et R₃ sont, indépendamment l'un de l'autre, choisis parmi un atome d'hydrogène, un groupe alkyle en C₁ à C₆, -(R)N(R')₂ et -(R'')OH, et R₄ et R₅ sont, indépendamment l'un de l'autre, un atome d'hydrogène ou un groupe méthyle, n est un nombre entier de 3 à 30, dans lequel R, R' et R'' sont des groupes alkyle en C₁ à C₆.

2. Electrolyte solide polymère selon la revendication 1, dans lequel un rapport de mélange du monomère polymérisable représenté par la formule (1) et d'un agent de réticulation représenté par la formule (2) est de 1:9 à 9:1 en poids.

3. Electrolyte solide polymère selon la revendication 1 ou 2, dans lequel le monomère polymérisable représenté par la formule (1) est au moins un monomère choisi parmi l'acrylamide, le N,N-diméthylacrylamide, le N,N-diéthylacrylamide, le N-isopropylacrylamide, le N,N-diméthylaminopropylacrylamide et l'acryloylmorpholine.

4. Electrolyte solide polymère selon- l'une quelconque des revendications 1 à 3, dans lequel l'agent de réticulation est le diacrylate de polyéthylèneglycol ou le diméthacrylate de polyéthylèneglycol.

5. Electrolyte solide polymère selon l'une quelconque des revendications 1 à 4, dans lequel le solvant est un solvant non aqueux.

6. Electrolyte solide polymère selon l'une quelconque des revendications 1 à 4, dans lequel le solvant est un mélange de solvant non aqueux et d'un solvant ayant un groupe amide.

7. Electrolyte solide polymère selon la revendication 5 ou 6, dans lequel le solvant non aqueux est au moins un solvant choisi parmi le carbonate de propylène, le carbonate d'éthylène, la γ-butyrolacétone, le 1,3-dioxolane, le diméthoxyéthane, le carbonate de diméthyle, le carbonate de diéthyle, le tétrahydrofuranne (THF), le diméthysulfoxyde et l'éther diméthylique de polyéthylèneglycol.

8. Electrolyte solide polymère selon la revendication 6, dans lequel le solvant ayant le groupe amide est au moins un solvant choisi parmi le N,N-diméthylacétamide, le N,N-diéthylacétamide, le N,N-diméthylformamide et le N,N-diéthylformamide.

9. Electrolyte solide polymère selon l'une quelconque des revendications 6 à 8, dans lequel le rapport de mélange du solvant non aqueux et du solvant ayant le groupe amide est de 1:3 à 3:1 en volume.

10. Electrolyte solide polymère selon la revendication 9, dans lequel le rapport de mélange du solvant non aqueux et du solvant ayant le groupe amide est de 1:1 en volume.

11. Electrolyte solide polymère selon l'une quelconque des revendications 1 à 10, dans lequel le sel inorganique est au moins un sel choisi parmi le perchlorate de lithium (LiClO₄), le tétrafluoroborate de lithium (LiBF₄), l'hexafluorophosphate de lithium (LiPF₆), le trifluorométhanesulfonate de lithium (LiCF₃SO₃) et le bistrifluorométhanesulfonylamide de lithium (LiN(CF₃SO₂)₂.

12. Electrolyte solide polymère selon l'une quelconque des revendications 1 à 11, dans lequel la teneur en monomère polymérisable représenté par la formule (1) est de 10 à 15% par rapport au poids de l'électrolyte solide polymère.

13. Electrolyte solide polymère selon l'une quelconque des revendications 1 à 12, dans lequel la teneur en agent de réticulation représenté par la formule (2) est de 5 à 15% en poids par rapport au poids de l'électrolyte solide polymère.

14. Electrolyte solide polymère selon l'une quelconque des revendications 1 à 13, dans lequel la teneur de l'amorceur de polymérisation est de 0,5 à 1,5% en poids par rapport au poids de l'électrolyte solide polymère.

15. Electrolyte solide polymère selon l'une quelconque des revendications 1 à 14, dans lequel la teneur de la solution d'électrolyte est de 68,5 à 84,5% en poids par rapport au poids de l'électrolyte solide polymère.

16. Electrolyte solide polymère selon l'une quelconque des revendications 1 à 15, dans lequel la teneur en sel inorganique retenu par le polymère de monomère de formule (1) est de 6 à 17% en poids par rapport au poids de la solution d'électrolyte.

17. Accumulateur au lithium contenant l'électrolyte solide polymère selon l'une quelconque des revendications 1 à 16.
